# EUROPEAN PATENT APPLICATION

(11) **EP 1 241 142 A2**
(43) Date of publication of application: **18.09.2002**
(21) Application number: 02004158.8
(22) Date of filing: 26.02.2002
(51) Int. Cl.: C03B 23/025, C03B 29/02

(54) **Method and heating means for manufacturing clear-glass washbasins by gravity bending**

(30) Priority: 13.03.2001 IT SA010005
(71) Applicant: Moretti Forni S.p.A., 61035 Marotta di Mondolfo PU (IT)
(72) Inventor: Langella, Ernesto, 84040 Pellezzano SA (IT)
(74) Representative: Gustorf, Gerhard, Dipl.-Ing.

(57) **Abstract**

Method and movable means for flat furnaces for the production of clear-glass washbasins, comprising closed-perimeter movable structure (1) enclosing heating elements (3) underneath means of support (9) of a glass sheet (10) featuring a hole outlining a deformation area.

## Description

### State of the art

This invention relates to a method and movable means to be installed in flat furnaces for firing glass and intended for the production of manufactured products, principally clear-glass washbasins.

It is known that, to make manufactured products in curved and/or melted glass, single-storey electric and/or gas industrial furnaces are used, with radiating elements normally consisting of electric heating elements, usually positioned on the ceiling of the furnace.

This well-known method is appropriate for the production of flat manufactured products in melted glass and curved glass with not very accentuated curving radii, inasmuch as the aforementioned arrangement of the radiating elements in the furnace results in the firing of flat glass or slightly curved glass being uniform over the entire surface, while it is harder to achieve a good result when glass is processed that has to feature particular and accentuated curves.

In particular, the production is highly problematic of manufactured products like washbasins because in order to obtain appropriate basin curving, a temperature must be reached above that of glass softening (620/670 C°), and this causes the opacification of the bottom of the manufactured product, so that in the production of manufactured products with accentuated curves, such as washbasins, standard furnaces can only be used to make non-transparent products.

In fact, according to the known method, to make manufactured products in glass with accentuated curves, such as washbasins, having transparency characteristics, furnaces have to be used that have been specifically designed for the purpose, formed of a base level with hole inside which are fitted a number of radiating bodies, meaning heating elements which, together with those on the ceiling, concentrate a greater amount of heat towards the part of the sheet of glass where the basin of the washbasin is created.

An innovation is therefore desirable suitable for adapting standard flat furnaces for the production of manufactured products with strong curves, such as washbasins, achieving manufactured product transparency characteristics.

### Objects of the invention

The main purpose of the present invention is to provide the means and method for adapting standard glass working flat furnaces for making manufactured products with strong curves, such as washbasins, avoiding any opacification of the finished product;

Another purpose of the present invention is to achieve the previous purpose in flat furnaces without making any permanent changes to these.

### Summary abstract of the disclosure

These and other purposes are achieved with the procedure and movable means for flat furnaces, for the production of washbasins in clear glass in accordance with the present invention, comprising closed-perimeter movable structure (1) enclosing heating elements (3) below means of support (9) of a glass sheet (10) featuring a hole outlining a deformation area.

### Identification of attached drawings

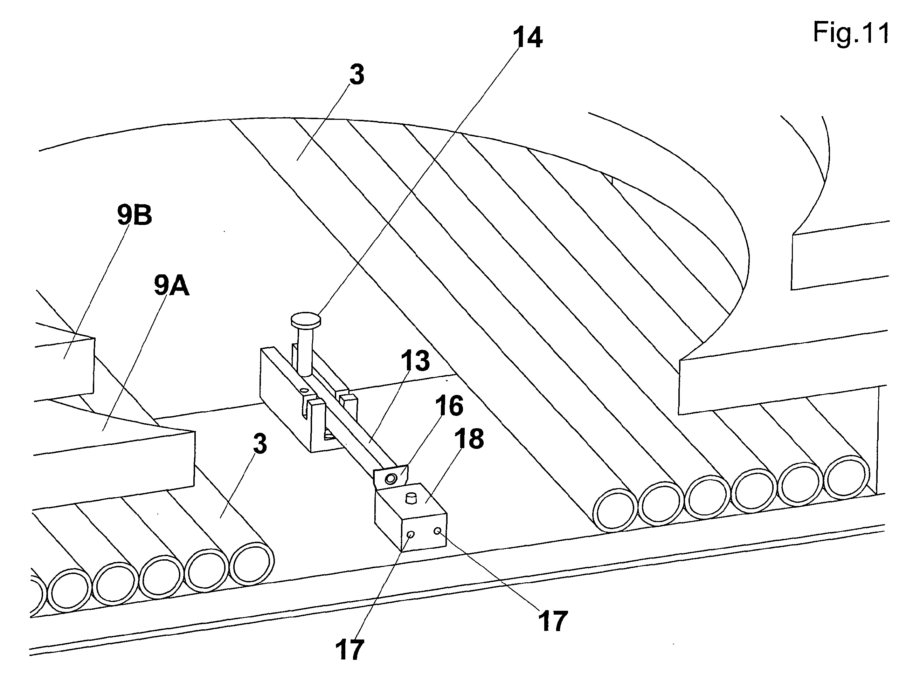

Further characteristics and advantages of the invention appear more clearly evident from the detailed description that follows of two preferred, but not exclusive forms of realisation, represented by way of non-restrictive example only, by the nine tables of attached drawings, in which:
fig. 1 shows a perspective view of a part of the device according to the present invention in a more artisan form of realisation;
fig. 2 shows a schematic plan view of another part of the device according to the present invention in a more artisan form of realisation;
fig. 3 shows a schematic plan view of the combination of parts shown in figures 1 and 2 making up the device according to the present invention;
fig. 4 shows a schematic side section view of a flat furnace equipped with the device according to the present invention;
fig. 5 shows a schematic side section view of a flat furnace equipped with the device according to the present invention during operation;
fig. 6 shows a perspective view of the device according to the present invention in a more engineered form of realisation;
fig. 7 is the same view as in fig. 6 with the device equipped with operating accessories;

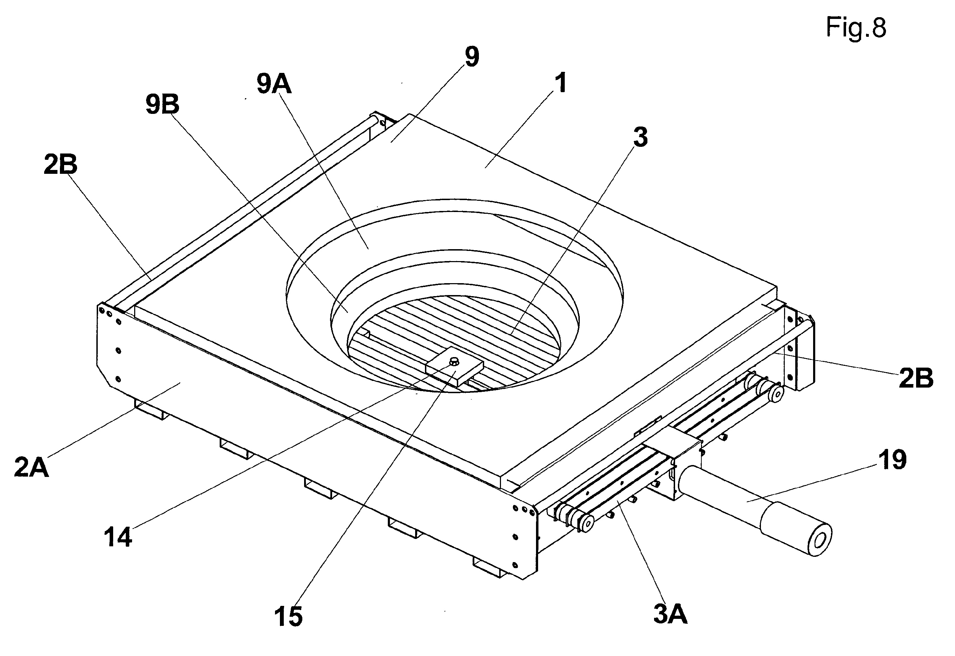

fig. 8 is the same view as in fig. 6 with the device partially dismounted to show parts otherwise concealed;

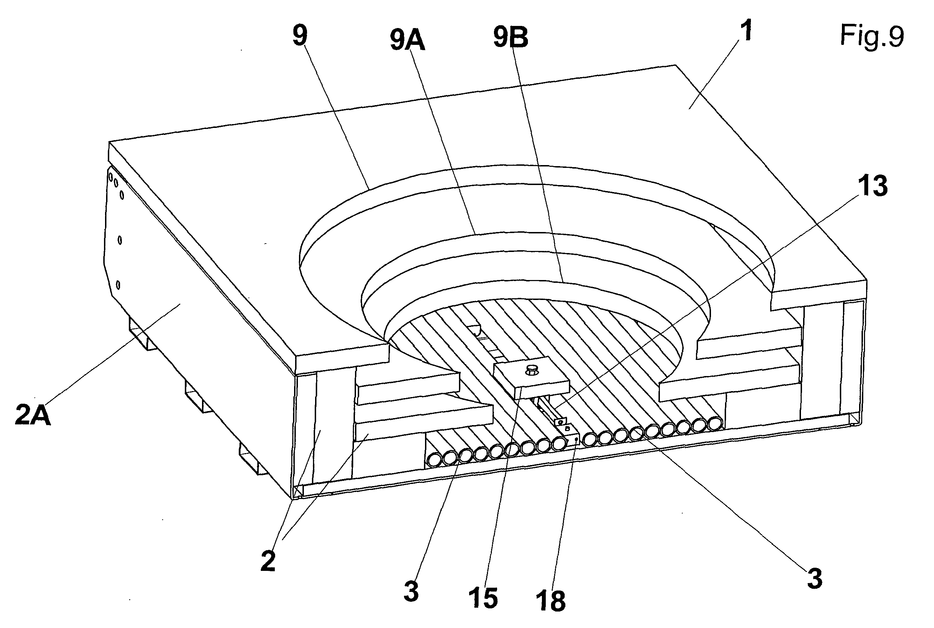

fig. 9 shows a perspective section view of the device shown in figure 6;

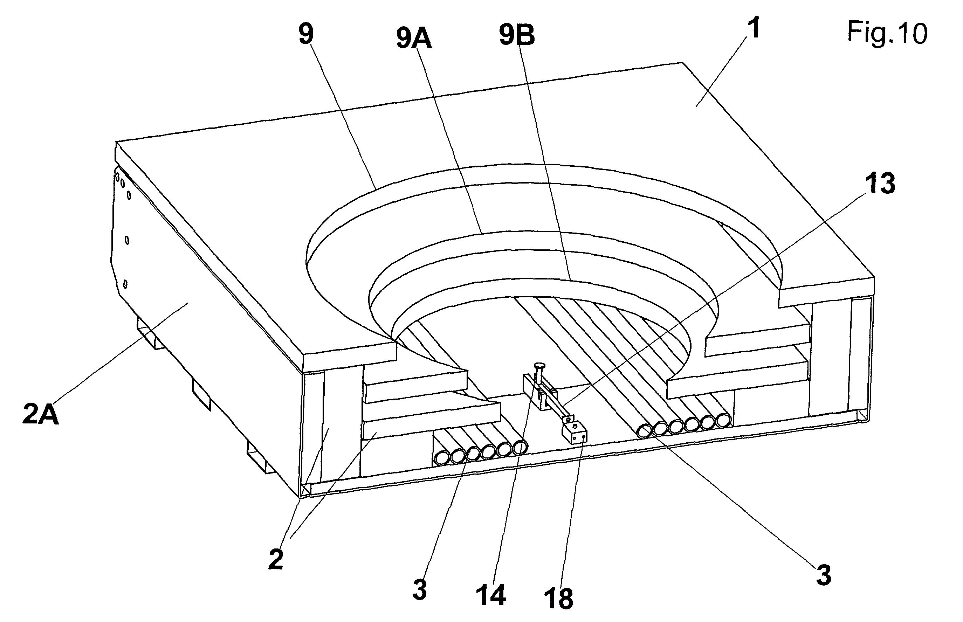

fig. 10 is the same view shown in fig. 9 with parts removed to better show others;
finally, figure 11 is an enlargement of figure 10 to better illustrate a detail.

### Static description of embodiment examples

With reference to such drawings by 1 is indicated a manufactured product defining a closed perimeter, in the present description also indicated as a ring even where not round, consisting of refractory parts 2 enclosed within a steel plate structure 2A featuring two handles 2B for handling, meaning the positioning or manual removal from the furnace.

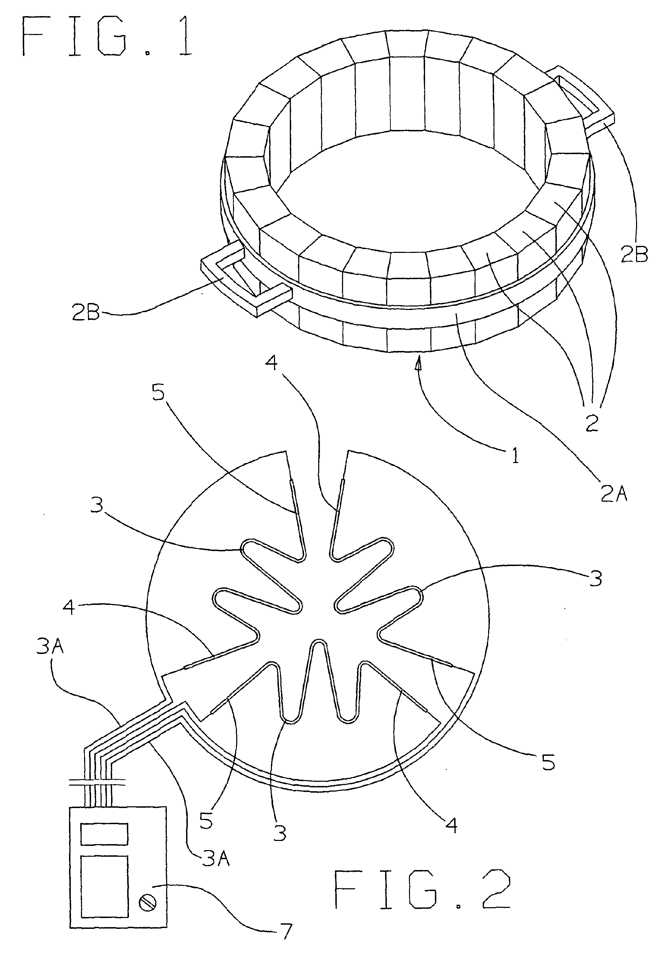

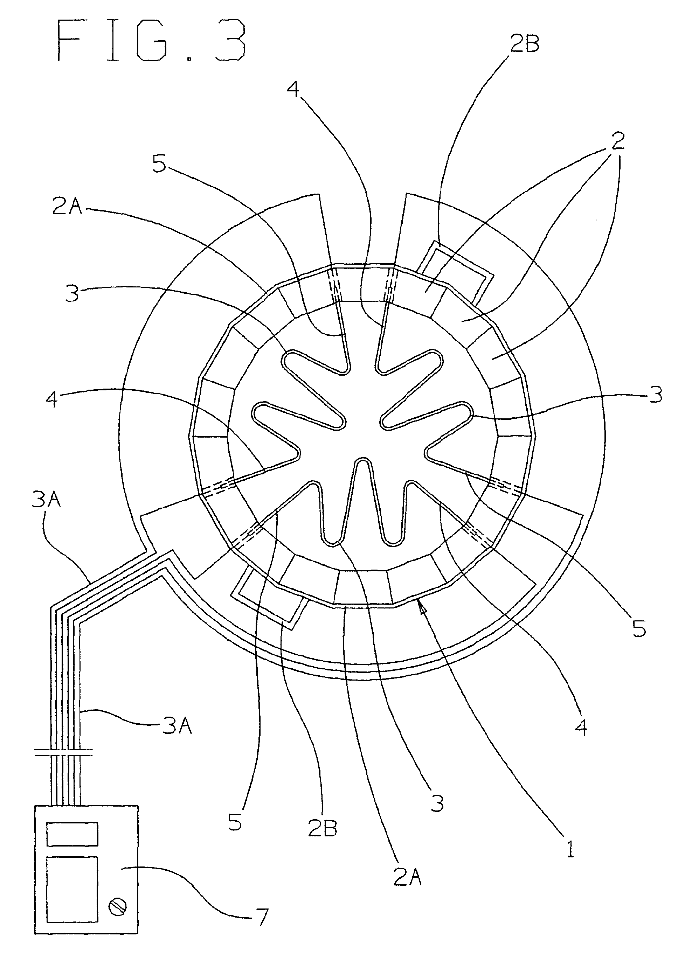

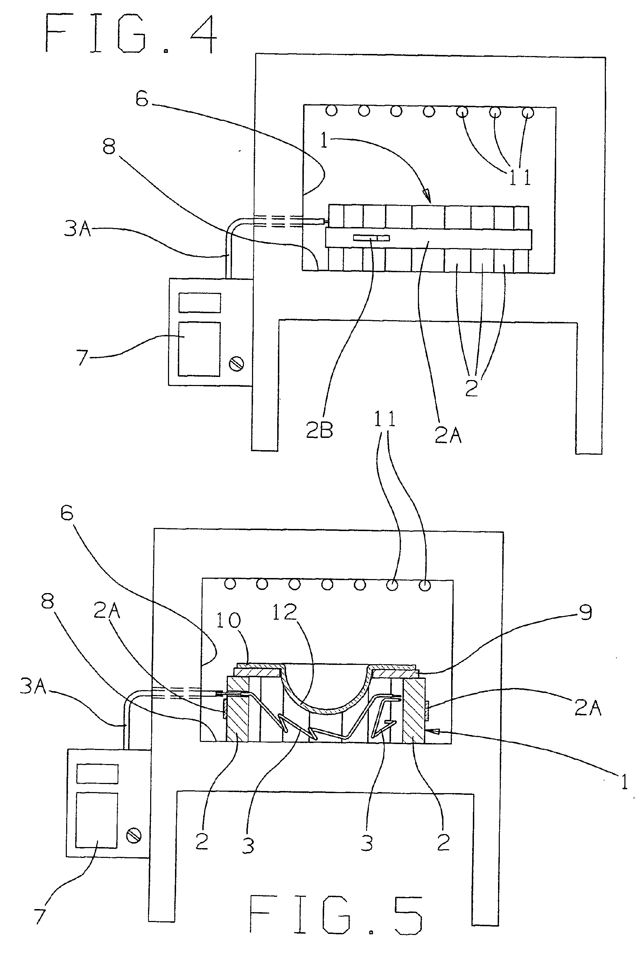

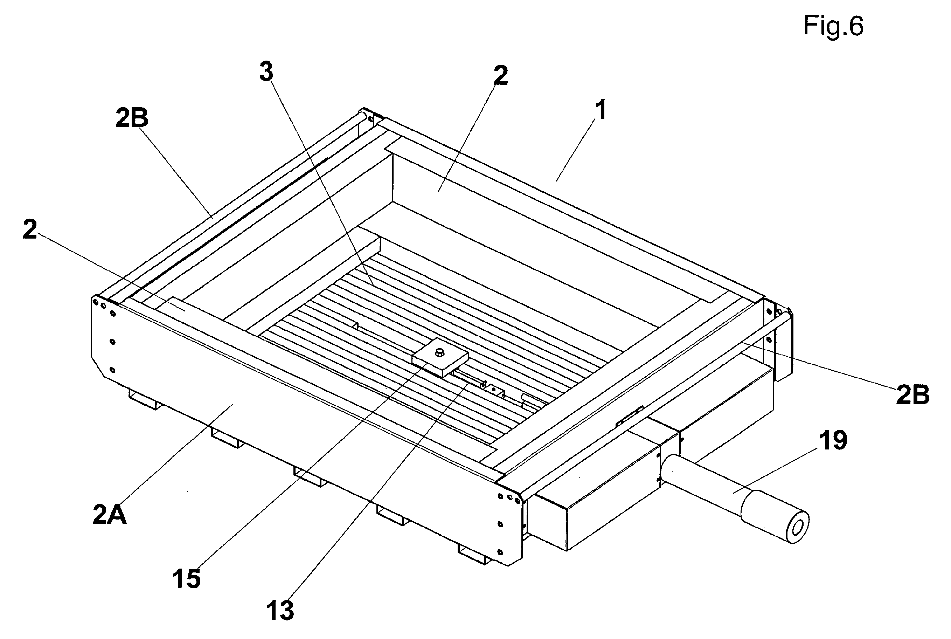

Inside the manufactured product 1 are housed a series of heating elements 3, which in the form shown in figures 1 to 5 present an undulated sinusoidal shape between the two extremes 4 and 5, while in the form of realisation shown in figures from 6 to 11 these are conceived straight and parallel and preferably replaced by infra-red ray lamps.

The manufactured product 1 is conceived to localise and maintain the heat produced by the heating elements 3 housed inside, with the least possible dispersion.

The end connections 3A of the heating elements 3 pass through ring 1 and then, through the walls of furnace 6, outside, where they come together in an electronic panel 7, complete with remote-control switch, installed apart or inside the main panel of furnace 6, which is any known type of furnace with flat base 8 with heating elements 11 on the ceiling.

The upper part of manufactured product 1 is partially occluded by a panel 9 in refractory material, featuring a central round hole, for placing a sheet of glass 10 which, as a result of the functions subsequently better described, is centrally deformed by gravity in a basin 12 within said hole of panel 9.

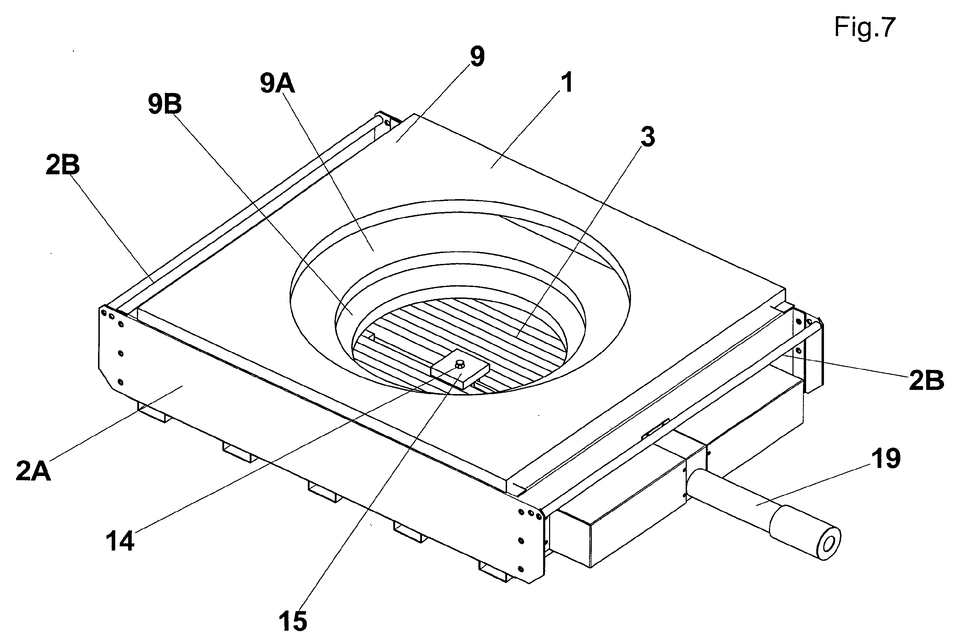

In the most engineered form of realisation, shown in figure 6 and following figures, under panel 9, in the space between this and the upper surface of the infra-red ray lamps 3, are preferably provided, located at a suitable distance from one another, two diaphragms 9A and 9B in refractory material, provided with relevant central coaxial round holes of decreasing diameter towards the bottom.

Furthermore, between the infra-red ray lamps 3, on the vertical of the centre of the round hole of panel 9, a switch device is fitted consisting of a lever 13 with mid fulcrum, featured above an arm of a sensor pin 14, projecting through a refractory brick 15, and below the other of a cuneiform and sharp contact element 16;
the contact element 16, preferably made of "nickel-chrome 80/20" or "inconel", is suitable for interfering with two wires 17, opening and closing the circuit leading up to these and fastened by a block 18, also preferably made of "nickel-chrome 80/20" or "inconel";
the wires 17, together with the connections 3A of the infra-red lamps 3, are jointed within a rod-shaped appendix 19, suitably insulated, projecting from the manufactured product 1 and suitable for being fitted in a hole made in the wall of the furnace 6, the only adaptation operation required in this, to reach the outside and be connected to the switchboard 7, preferably equipped with electronic unit for electric resistance detection, in the ways and for the purposes hereinafter explained.

### Dynamic description of embodiment examples

Operation of the present invention is in fact the following:
ring 1 is positioned on the bottom 8 of furnace 6, fitting inside the rod-shaped appendix 19 in a hole previously made for the purpose through a wall of this, the only small adaptation operation required to use the device according to the present invention in any flat furnace, wherever said hole can be easily closed with a stopper made of refractory material of cylindrical shape when not in use.

Above panel 9 the glass sheet 10 can then be rested and starting begun of both the heat sources 11 of the furnace 6 itself, and of the infra-red lamps 3 of the ring, the caloric energy of the latter being conveyed under the sheet 10, including with the aid of diaphragms 9A and 9B.

This way, within the volume of furnace 6, two firing chambers are substantially determined, one above the glass sheet 10 fuelled by the heat sources 11 of the furnace 6, the other below sheet 10, defined by the hole of support panel 9 and the internal volume of ring 1, as well as fuelled, besides by the heat sources 11 of the furnace 6, by the infra-red lamps 3 of ring 1, so that here the temperature is much higher compared to that of the former.

When the temperature is suitably dosed, in the first chamber the temperature of glass softening is not substantially exceeded, so that no contraindications occur in terms of opacification of the sheet upon completion of the work, while in the latter this is exceeded and the sheet 10, on softening, curves due to its own gravity and forms a basin 12, which goes to make up the washbasin when work is terminated.

In the form of realisation shown in figures from 6 to 11, the deformation process is stopped automatically by the process of deformation itself on this being completed:
when the basin 12, in its gradual formation, starts to weigh on the plate of the sensor pin 14, the lever 13 is dislocated and the contact element 16 lifts up opening the circuit connected to the two wires 17, thereby providing a supply interruption signal to the caloric means, so that the creation of the basin 12 crystallises in that condition.

Mention must be made of an actuating feature of this automatic interruption system, due to the oxidisation of the leads, which exponentially increases at the operating temperatures involved:
at high temperatures, the leads oxidise and along with oxidisation there is an increase in electrical resistance, and because of this, at the operating temperatures involved the closing and opening of a standard electrical circuit for transmitting a command is not functional, including when the circuit consists of a lead particularly resistant to oxidisation, such as "nickel-chrome 80/20" or "inconel";
to overcome this problem, the electronic unit associated with the circuit leading to wires 17 is programmed to determine the resistance and calibrated to tolerate increases in resistance, due to the formation of oxide on the leads because of the high temperature, up to levels corresponding to temperatures much higher than operating temperatures, this prudentially and especially to cover the possibility of lack of switch maintenance and cleaning, corresponding to increases in resistance.

When the circuit is opened due to displacement of the contact element 16 the electrical resistance detected by the electronic unit become infinite and in any case increases to levels above the relevant programming ceiling, detection that is perceived as a signal of disengagement of supply of electricity to the heating elements 3 and 11 of furnace 6 and of ring 1.

Finally, it must be remarked that the sharpening of the contact element 16 permits to some extent locally cutting into the film of residual oxide on leads 17, thus contributing to the phenomenon of increase in electrical resistance.

### Embodiment alternatives

It is obvious that in further forms of implementation, albeit forming part of the concept of innovation subtended to the example of realisation illustrated above and claimed below, the device in accordance with this invention can be materialised with technical and structural equivalents, meaning it can be equipped with further integrative solutions, just like all the conformations of the relevant constituent parts can be changed in a way suitable for the purpose, whereby it is intended as below to grant substance merely by way of example and not by way of restriction:
the conformation of the manufactured product, as regards the outline shape and all else, can be whatsoever suitable for the purpose;
the arrangement of the relevant constituent refractory parts can be whatever suitable for the purpose;
the hole of the sheet support can have any conformation, so as to make basins of any shape.

### Advantages of the invention

As appears evident from the above detailed description of a preferred example of implementation and from the above reference to a number of manufacturing variations, the device according to this invention offers the advantages corresponding to the achievement of the aims set and others still: it does in fact integrate a functional, modular, multipurpose and economical means for adapting flat furnaces to the production of glass manufactured products with accentuated arching maintaining excellent product transparency characteristics.

### Scope of the requested protection

Having thus described the device in accordance with the present invention with reference to its preferred forms of realisation, the desire is obvious to protect all the possible forms of manufacture with variations of standard implementation for skilled in the art people, which do not modify the invention without evading the purposes for which this was intended; this means, both in the preceding description and in the claims below, protecting all embodiment forms and variations forming part of the concept of solution, in the spirit and within the purposes of the invention itself.

## Claims

1. Device for producing clear-glass washbasins, **characterised by** the fact of comprising a movable closed-perimeter structure (1) enclosing heating elements (3) below means of support (9) of a sheet of glass (10) featuring a hole outlining a deformation area.

2. Device as claimed in claim 1, **characterised by** the fact that said movable closed-perimeter structure (1) consists of refractory parts (2) retained by a metal structure (2A) featuring handling means (2B) and enclosing heating elements or infra-red ray lamps (3).

3. Device as claimed in claim 1, **characterised by** the fact that said means of support (9) of said glass sheet (10) consist of a panel (9) in refractory material featuring a hole however shaped suitable for placing on top of said removable closed-perimeter structure (1).

4. Device as claimed in claim 1, **characterised by** the fact that underneath said means of support (9) of said sheet of glass (10) in the space between this and the top surface of the heating elements (3) diaphragms (9A, 9B) are located in refractory material, complete with respective holes however shaped, coaxial with diameter decreasing towards the bottom.

5. Device as claimed in claim 1, **characterised by** the fact of being equipped with automatic switch triggered by contact with said glass sheet (10) in order to achieve a preset degree of deformation.

6. Device as claimed in claim 1, **characterised by** the fact of being equipped with an automatic switch triggered by contact with said glass sheet (10) in order to achieve a preset degree of deformation consisting of a mechanical sensor working in conjunction with an electrical circuit.

7. Device as claimed in claim 1, **characterised by** the fact of being equipped with an automatic switch triggered by contact with said glass sheet (10) in order to achieve a preset degree of deformation consisting of a lever (13) with mid fulcrum featuring on an arm a mechanical sensor (14) protruding through a refractory brick (15) and on the other arm a cuneiform and sharp contact element (16) suitable for interfering with two wires (17) opening and closing the circuit leading to this.

8. Device as claimed in claim 7, **characterised by** the fact that to said two wires (17) is connected a circuit comprising an electronic unit with programmed logic to detect the electrical resistance of the circuit itself and calibrated to tolerate increases in electrical resistance due to the formation of oxide on the leads due to high temperature up to levels corresponding to temperatures higher than the operating temperatures of the device as well as to detect the opening of the circuit due to dislocation of the contact element (16) as increase of electrical resistance higher than that tolerated and heating element (3) disengagement command signal.

9. Device as claimed in claim 7, **characterised by** the fact that said wires (17) and said contact element (16) consist of "nickel-chrome 80/20" or "inconel".

10. Device as claimed in preceding claims, **characterised by** the fact that said removable closed-perimeter structure (1) presents any perimeter conformation whatsoever.

11. Device as claimed in preceding claims, **characterised by** the fact that said constituent refractory parts (2) feature any appropriate shape and are arranged in any way whatsoever suitable for the purpose.

12. Device as claimed in preceding claims, **characterised by** the fact that said heating elements or infra-red ray lamps (3) are provided in any number whatsoever suitable for the purpose.

13. Device as claimed in preceding claims, **characterised by** the fact that said heating elements or infra-red ray lamps (3) have any appropriate conformation and are arranged in any way whatsoever suitable for the purpose.

14. Device as claimed in preceding claims, **characterised by** the fact that the connections (3A) of said heating elements (3) and said wires (17) of the circuit of said automatic switch are conveyed to the outside through the walls of the furnace (6) where they are connected to an electronic switchboard (7) installed independently or inside the main furnace panel (6) to which they are slaved by an electronic logic.

15. Device as claimed in preceding claims, **characterised by** the fact that the connections (3A) of said heating elements (3) and said wires (17) of the circuit of said automatic switch are connected up inside a rod-shaped insulated appendix (19) protruding from said structure (1) and suitable for being fitted in a hole made in the wall of the furnace.

16. Method for the production of clear-glass washbasins **characterised by** the fact of comprising positioning of the removable structure (1) according to any of the previous claims inside a flat furnace (6), placing on the removable structure (1) a sheet of glass (10), engagement of both the heating elements (11) of the furnace (6) and the heating elements (3) of the movable structure (1), consequent creation inside the furnace (6) of a splitting up of the firing space substantially into two chambers or volumes, one top chamber fuelled by the heating elements (11) of the furnace (6) that give the glass a temperature not higher than that of relevant softening, the other underneath the means of support (9) of the sheet of glass (10) and consisting of the internal volume of the movable structure (1) as well as fuelled by the heating elements (3) of the moving structure (1) which locally give the glass sheet (1) a temperature above that of relevant softening such as to deform the glass into a basin (12) by gravity of the glass itself.
